# EUROPÄISCHE PATENTANMELDUNG

(11) **EP 4 813 612 A1**
(43) Veröffentlichungstag der Anmeldung: **30.09.2026**
(21) Anmeldenummer: 25166420.7
(22) Anmeldetag: 26.03.2025
(51) Int. Cl.: B29C 65/16, B65B 9/04, B29C 65/48, B29C 65/78, B65B 51/16, B29L 31/00

(54) **VORRICHTUNG ZUM VERPACKEN EINES INSBESONDERE FLÄCHIG AUSGESTALTETEN MEDIZINISCHEN PRODUKTS**

(71) Anmelder: Paul Hartmann AG, 89522 Heidenheim (DE)
(72) Erfinder: SCHMIDT, Christian, 89522 Heidenheim (DE); ASCHAUER, Marius, 89522 Heidenheim (DE); FRANK, Bernd, 89522 Heidenheim (DE); SPRICK, Ralf, 89522 Heidenheim (DE)
(74) Vertreter: Paul Hartmann AG Patents & Licensing

(57) **Zusammenfassung**

Die vorliegende Erfindung betrifft eine Vorrichtung (100) zum Verpacken eines, insbesondere flächig ausgestalteten, medizinischen Produktes (A) zwischen zwei gegenüberliegenden flexiblen Materialbahnen (11, 12) umfassend:

- eine Lasersiegeleinheit (30), umfassend einen Laser (31),

- eine Walze (40), die dazu ausgestaltet ist, die Materialbahnen (11, 12) und das Produkt (A) weiterzuleiten,

- einen transparenten Führungskörper (20), der für den Laserstrahl der Lasersiegeleinheit (30) durchlässig ist

und wobei eine erste Oberfläche (21) und eine zweite Oberfläche (22) den transparenten Führungskörper (20) entlang einer Ausdehnungsrichtung begrenzen,

wobei der Führungskörper (20) eine der Materialbahnen (11) an zumindest einem Siegelpunkt (23) an der ersten Oberfläche (21) in einem Siegelbereich (50) berührt, wobei der Siegelbereich (50) zwischen dem Führungskörper (20) und der Walze (40) angeordnet ist,

wobei die Lasersiegeleinheit (30) so angeordnet ist, dass der Laserstrahl der Lasersiegeleinheit (30) den transparenten Führungskörper (20) von der zweiten Oberfläche (22) zu dem Siegelpunkt (23) an der ersten Oberfläche (21) durchdringt, und wobei die Lasersiegeleinheit (30) dazu ausgestaltet ist, einen thermisch aktivierbaren Klebstoff, der auf zumindest einer Oberfläche mindestens einer der flexiblen Materialbahnen (11, 12) aufgebracht ist, oder ein Material mindestens einer der flexiblen Materialbahnen (11,12) zumindest an dem Siegelpunkt (23) zu erhitzen.

## Beschreibung

Die vorliegende Erfindung betrifft ein Verfahren und eine Vorrichtung zum Verpacken eines, insbesondere flächig ausgestalteten, medizinischen Produkts.

Im medizinischen Bereich gibt es verschiedene Arten von Wundauflagen. Meist werden diese medizinischen Produkte einzeln kuvertförmig verpackt.

Die Einzelverpackung der medizinischen Produkte erfolgt, indem die einzelnen Produkte zwischen zwei flexiblen, sich überlappenden flexiblen Materialbahnen eingeschlossen werden und die Materialbahnen an ihren Rändern meist durch Klebstoff miteinander verbunden werden. Typischerweise wird ein thermisch aktivierter Klebstoff verwendet, weil dieser eine stabile Versiegelung der Materialbahnen gewährleistet, so dass die Produkte vor äußeren Einflüssen geschützt sind. Dank dieser thermisch aktivierten Klebstoffe ist die Verpackung nach dem Öffnen nicht mehr wiederverschließbar, so dass die Gesundheits- und Hygienestandards für die Vermarktung von Pflastern oder ähnlichen Produkten eingehalten werden können. Die Verpackung kann aus zwei Bahnabschnitten aus Papier oder aus einem Bahnabschnitt aus Papier und einem Bahnabschnitt aus einem Kunststoffmaterial sowie aus zwei Bahnabschnitten aus Kunststoffmaterial bestehen. Das Kunststoffmaterial kann zum Beispiel transparent sein, wie Polyethylen. Ebenso wird oft metallisiertes Polyethylenterephthalat (PET) oder ein Aluminium-Verbundstoff als Material der Bahn verwendet. Oft bestehen die Verpackungen medizinischer Produkte aus einem Bahnabschnitt mit einer Außenfläche, auf der Informationen über das Produkt aufgedruckt sind, und aus einem Bahnabschnitt aus transparentem Kunststoffmaterial. Typischerweise ist der thermisch aktivierbare Klebstoff auf eine Innenseite einer der Materialbahnen aus Papier aufgetragen. So kann sich auf der Innenseite beispielsweise eine Klebstoffschicht befinden. Optional kann die Klebstoffschicht die Form einer Siegelnaht annehmen, so dass sich der Klebstoff ausschließlich in dem zum Siegeln vorgesehenen Bereich, befindet. Die mit dem thermisch aktivierten Klebstoff versehene Materialbahn kann ein beschichtetes Material sein, das bereits mit einem Klebstoff versehen ist.

In Vorrichtungen und Verfahren nach dem Stand der Technik erfolgt das Verpacken der medizinischen Produkte zwischen zwei flexiblen Bahnabschnitten, indem eine fortlaufende Anordnung von medizinischen Produkten entlang einer Maschinenrichtung mit Abstand zueinander vorgeschoben wird. Zwei fortlaufende flexible Materialbahnen, von denen eine mit einer Schicht aus thermisch aktiviertem Klebstoff versehen ist, überlappen einander. Durch die Versiegelung wird eine zusammenhängende Verbundbahn gebildet, die aus den beiden flexiblen Endlosmaterialbahnen und der zwischen den beiden flexiblen Endlosmaterialbahnen eingeschlossenen kontinuierlichen Anordnung von medizinischen Produkten besteht. Die Verpackungen werden verschlossen, indem die kontinuierliche Verbundbahn durch ein erstes und ein zweites Walzenpaar von möglicherweise beheizten Andruckrollen zusammengepresst werden. Typischerweise führt das erste Walzenpaar zwei kontinuierliche Längssiegelungen zwischen den beiden flexiblen Folien aus und das zweite Walzenpaar führt Siegelungen quer zur Stromrichtung der Verbundbahn aus. Die Richtung, in der das bahnförmige Material die Vorrichtung zum Verpacken durchläuft, wird im Folgenden als Stromrichtung bezeichnet.

Die Fixierung zwischen den beiden flexiblen Materialbahnen erfolgt durch die Aktivierung des thermisch aktivierten Klebstoffs, während die flexiblen Materialbahnen entlang der Kompressionslinien zusammengedrückt werden.

Die Fixierung kann ebenfalls durch Verschweißen der beiden Materialbahnen miteinander erfolgen, während die flexiblen Materialbahnen entlang der Kompressionslinien zusammengedrückt werden. Beim Verschweißen werden die beiden Materialbahnen unlösbar unter Anwendung von Wärme miteinander verbunden, ohne dass dabei ein Zusatzwerkstoff, wie ein thermisch aktivierbarer Klebstoff, dabei verwendet wird.

Anschließend werden die Verpackungen aus dem kontinuierlichen Verbundbahn durch geeignete Schnitte quer zur Stromrichtung, typischerweise zwischen den Quernähten zwischen jedem Produktpaar, gewonnen.

Die Verbindung zwischen den beiden flexiblen Materialbahnen muss genaue Qualitätsanforderungen erfüllen, die von den Pflasterherstellern festgelegt werden. Die qualitativen Spezifikationen sind wie folgt:
- in optischer Hinsicht: Die Siegelnaht muss vollständig sein und es muss ein deutlicher Übergang des Klebematerials von einem Bahnabschnitt auf den gegenüberliegenden vorhanden sein oder die beiden Materialbahnen müssen ausreichend miteinander verschmolzen sein. Die Siegelnaht muss ebenso vollständig und sauber sein, ohne Verunreinigungen und ohne sichtbare Schäden, die Farbe der Verpackungsbahnen darf sich durch das Versiegeln nicht verändern und die Verpackungsbahnen dürfen durch das Versiegeln nicht merklich verformt werden;
- im Hinblick auf die Versiegelung der Siegelnaht: Die Ablösekraft (Peeling) muss innerhalb eines genau quantifizierten Bereichs liegen, und beim Öffnen der Verpackung darf die Ablösekraft nicht außerhalb festgelegter Schwellenwerte zwischen den einzelnen Bereichen oder zwischen verschiedenen Verpackungen schwanken.
- unter dem Gesichtspunkt der Versiegelung der Siegelnaht und der hygienisch-sanitären Normen: Die Verpackung muss so verschlossen werden, dass sich das Produkt in einer Umgebung befindet, in der keine Verunreinigungen von außen in die Verpackung eindringen können, und dass auch gewährleistet ist, dass keine Stoffe aus dem Inneren der Verpackung austreten (eine Dichtheitsprüfung wird durchgeführt, indem eine gefärbte Flüssigkeit in die Verpackung eingebracht und das Auslaufen von Substanzen überwacht wird). Oft handelt es sich bei der Verpackung um ein Sterilbarriere-System, welches das Produkt vor eindringenden Erregern schützt. Insbesondere wenn das Produkt nach der Herstellung in der gesiegelten Verpackung sterilisiert wird, ist die Integrität der Siegelnaht ist von großer Wichtigkeit, um die Keimfreiheit zu gewährleisten.

Eines der Hauptprobleme der Vorrichtungen und Verfahren nach dem Stand der Technik ist, dass die derzeitige Höchstgeschwindigkeit der Verpackungsanlagen in der Größenordnung von 50-60 m/min liegt. Diese Geschwindigkeitsbegrenzung ist darauf zurückzuführen, dass die Andruckwalzen mit zunehmender Geschwindigkeit der Verpackungsanlage nicht mehr in der Lage sind, den flexiblen Materialbahnen ausreichend Energie zuzuführen, um die korrekte Übertragung des Klebematerials von einer flexiblen Materialbahn auf die andere Materialbahn bzw. das Verbinden der beiden flexiblen Materialbahnen zu ermöglichen, da sich die Kontaktzeit zwischen den Andruckwalzen und den Materialbahnen proportional verringert. In diesem Zusammenhang würde eine Erhöhung der Bahngeschwindigkeit der Verpackungsanlage über die Grenze von 50-60 m/min hinaus die vorgeschriebenen Qualitätsanforderungen gefährden.

Die objektive technische Aufgabe besteht daher darin, dass ein Verfahren und eine Vorrichtung zur Verfügung gestellt werden, die ein zuverlässiges Versiegeln der Verpackung eines flächig ausgestalteten, medizinischen Produkts insbesondere bei hoher Bahngeschwindigkeit erlauben.

Die Aufgabe wird gelöst durch eine Vorrichtung zum Verpacken eines, insbesondere flächig ausgestalteten, medizinischen Produktes zwischen zwei gegenüberliegenden flexiblen Materialbahnen. Die Vorrichtung umfasst eine Lasersiegeleinheit, umfassend einen Laser, einen transparenten Führungskörper, der für den Laserstrahl der Lasersiegeleinheit durchlässig ist, und eine Walze, die dazu ausgestaltet ist, die Materialbahnen und das Produkt weiterzuleiten.

Der transparente Führungskörper ist durch eine erste Oberfläche und eine zweite Oberfläche entlang einer Ausdehnungsrichtung begrenzt. Der Führungskörper berührt eine der Materialbahnen an zumindest einem Siegelpunkt in einem Siegelbereich, der zwischen dem Führungskörper und der Walze angeordnet ist. Die Lasersiegeleinheit ist so angeordnet, dass der Laserstrahl der Lasersiegeleinheit den transparenten Führungskörper von der zweiten Oberfläche zu dem Siegelpunkt an der ersten Oberfläche durchdringt. An diesem Siegelpunkt wird ein thermisch aktivierbarer Klebstoff, der auf zumindest einer Oberfläche mindestens einer der flexiblen Materialbahnen aufgebracht ist, oder ein Material mindestens einer der flexiblen Materialbahnen erhitzt.

Ebenso betrifft die vorliegende Erfindung ein Verfahren zum Verpacken eines, insbesondere flächig ausgestalteten, medizinischen Produkten nach Anspruch 9 und ein System nach Anspruch 8.

Die Siegelnaht wird gebildet durch alle Verbindungsstellen zwischen zwei Materialbahnabschnitten, die ein medizinisches Produkt einschließen. Die vorgesehene Siegelnaht entspricht den Positionen auf den Materialbahnen, die anschließend durch die Siegelnaht verbunden werden sollen. Die Siegelnaht wird durch Verkleben oder Verschweißen der beiden Materialbahnen erzeugt.

In einer bevorzugten Ausführungsform schließt die Siegelnaht das medizinische Produkt vollständig ein und dient somit als Sterilbarriere.

Die Siegelnaht kann zwei Längsnähte parallel zur Stromrichtung umfassen. Die Siegelnaht kann ebenfalls Quernähte umfassen, die die beiden Längsnähte so verbinden, dass eine geschlossene Siegelnaht entsteht. Als Quernaht werden alle Teile der Siegelnaht bezeichnet, die nicht im Wesentlichen parallel zur Stromrichtung verlaufen. Die Quernaht kann beispielsweise senkrecht zur Stromrichtung verlaufen. Die Quernaht kann aber auch aus zwei von den Längsnähten ausgehenden Linien bestehen, die in einem Punkt zusammenlaufen bestehen. Die Quernaht kann ebenfalls eine abgerundete Form aufweisen.

In einer besonders bevorzugten Ausführungsform besteht die Siegelnaht der Verpackung eines medizinischen Produkts aus einer ersten und einer zweiten Längsnaht und zwischen diesen angeordneten Quernähten, wobei die beiden Längsnähte und die Quernähte ein Rechteck bilden. Ebenso kann vorgesehen sein, dass die Siegelnaht so ausgestaltet ist, dass zwei oder mehr medizinische Produkte senkrecht zur Stromrichtung nebeneinander versiegelt werden können.

Die Materialbahnen sind aus einem flexiblen Material. Bevorzugt handelt es sich bei diesem Material um Papier oder Kunststoff. Beispielsweise ist der Kunststoff PET, Polyvinylchlorid (PVC) oder Polyethylen (PE). Der thermisch aktivierbare Klebstoff ist bevorzugt zumindest auf einer der Oberflächen der Materialbahnen aufgetragen. Der thermisch aktivierbare Klebstoff kann gestrichen auf die Materialbahn aufgetragen sein, insbesondere kann eine so beschichtete, flexible Materialbahn einen Leimanteil von 14% umfassen. In einer alternativen Ausführungsform ist der thermisch aktivierbare Klebstoff in einem Gittermuster auf die Oberfläche einer der Materialbahnen aufgetragen. Die gitterbeschichtete Materialbahn weist bevorzugt einen Klebstoffanteil von 9% auf. Durch die Verwendung des Gittermusters bleiben zwischen den Klebebereichen gasdurchlässige Bereiche frei. Diese Ausführungsform ist daher bei der Sterilisation mit Ethylenoxid zu bevorzugen. Durch den Laserstrahl wird eine vorgesehene Siegelnaht auf dieser Klebstoffbeschichtung erhitzt und damit in den adhäsiven Zustand gebracht. Der thermisch aktivierbare Klebstoff kann damit zielgenau nur an der vorgesehenen Siegelnaht erhitzt werden und das medizinische Produkt haftet nicht ungewollt an der Verpackung.

In einer Ausführungsform ist eine Oberfläche einer Materialbahn nur an den Stellen mit thermisch aktivierbarem Klebstoff beschichtet, die der vorgesehenen Siegelnaht entsprechen. Vorzugsweise ist die gesamte Oberfläche beschichtet. Es können eine oder auch beide der Materialbahnen eine Beschichtung aus thermisch aktivierbarem Klebstoff aufweisen.

Im Falle eines Verschweißens der beiden Materialbahnen muss zumindest eine der Materialbahnen ein Thermoplast umfassen. Bevorzugt handelt es sich dabei um PE, PP, PET oder PA. Ebenso kann mindestens eine der beiden Materialbahnen ein Verbundmaterial umfassend ein Thermoplast sein. Bevorzugt weisen die beiden Materialbahnen an ihrer Oberfläche, die der anderen Materialbahn zugewandt ist, eine Schicht umfassend ein Thermoplast auf. In einer Ausführungsform kann ein solches Verbundmaterial einen Lack, ein Kraftpapier, eine Aluminiumfolie, eine PE-Peel Folie und Adhäsive zur Verbindung der Schichten umfassen. Entsprechende Verbundmaterialen werden beispielsweise in DIN EN ISO 2286-2 und DIN EN ISO 534 beschrieben.

Das Quadratmetergewicht einer Materialbahn aus Papier beträgt in der Regel zwischen 40 g/m² und 100 g/m². Ist das Papier mit einem Gittermuster aus thermisch aktivierbarem Klebstoff beschichtet so hat die Materialbahn üblicherweise ein Quadratmetergewicht von 60 g/m² bis 120 g/m².

Das Quadratmetergewicht eines Verbundmaterials beträgt in der Regel zwischen 60 g/m² und 120 g/m², bevorzugt zwischen 80 g/m² und 110 g/m² und besonders bevorzugt zwischen 90 g/m² und 105 g/m².

In einer Ausführungsform weisen die medizinischen Produkte eine maximale Höhe von 15 mm auf, bevorzugt 5 mm und insbesondere bevorzugt 2 mm auf. Die Höhe des medizinischen Produkts wird dabei als seine maximale Ausdehnung senkrecht zur Materialbahn bestimmt. In einer bevorzugten Ausführungsform sind die flächig ausgestalteten medizinischen Produkte Wundauflagen.

Bevor sie die Vorrichtung zum Verpacken eines medizinischen Produkts erreichen, weisen die Materialbahn und somit ggf. der Klebstoff eine Temperatur auf, welche unterhalb der Schmelztemperatur liegt. Meist beträgt die Temperatur ungefähr 23°C. In der Vorrichtung zum Verpacken werden die Materialbahnen und insbesondere der Klebstoff daher erhitzt. Durch die Verwendung eines Lasers in der Lasersiegeleinheit ist eine schnellere Energieübertragung möglich als durch beheizte Siegelwalzenpaare.

Wenn die Materialbahn keinen thermisch aktivierbaren Klebstoff umfasst, ist die Lasersiegeleinheit ist dazu ausgestaltet, die vorgesehenen Siegelnähte der Materialbahnen auf eine Temperatur von 100°C bis 220°C, bevorzugt 110°C bis 180°C, insbesondere 120°C bis 160 °C zu erhitzen.

Wenn die Materialbahn einen thermisch aktivierbaren Klebstoff umfasst, ist die Lasersiegeleinheit dazu ausgestaltet, den thermisch aktivierbaren Klebstoff, der auf der Oberfläche mindestens einer der Materialbahnen aufgetragen ist, auf 80°C bis 160°C, bevorzugt 90°C bis 150°C, insbesondere 100°C bis 140°C zu erhitzen.

Bevorzugterweise ist die Lasersiegeleinheit dazu ausgestaltet eine Wärmemenge von 0,01 $\frac{mJ}{{mm}^{2}}$ bis $30 \frac{mJ}{{mm}^{2}}$, bevorzugt $0 , 1 \frac{mJ}{{mm}^{2}}$ bis $20 \frac{mJ}{{mm}^{2}}$, insbesondere $1 \frac{mJ}{{mm}^{2}}$ bis $15 \frac{mJ}{{mm}^{2}}$ in die Materialbahn bzw. den thermisch aktivierbaren Klebstoff einzubringen.

Mittels des Führungskörpers und der Walze wird der für die Versiegelung notwendige Druck auf die Materialbahnen und/oder den erhitzten thermisch aktivierten Klebstoff im Siegelbereich ausgeübt.

Der Führungskörper ist transparent für den Laserstrahl der Lasersiegeleinheit. Ebenso weist der Führungskörper eine hohe Hitzebeständigkeit auf, so dass er nicht beim Versiegeln der medizinischen Produkte verformt oder beschädigt wird. Bevorzugt besteht der Führungskörper aus Glas, wie beispielsweise Borsilikatglas, Quartzglas, Saphirglas oder Calciumfluorid. Auch kann der Führungskörper aus Keramik oder Kunststoff, wie PMMA, bestehen.

Der Führungskörper ist durch die erste Oberfläche und die zweite Oberfläche entlang einer Ausdehnungsrichtung begrenzt. Gleichzeitig berührt der Führungskörper eine der Materialbahnen an zumindest dem Siegelpunk. Der Siegelpunkt ist ein Punkt auf der ersten Oberfläche des transparenten Führungskörpers im Siegelbereich. Der Laserstrahl der Lasersiegeleinheit durchdringt den Führungskörper von der zweiten Oberfläche bis zu dem Siegelpunkt an der ersten Oberfläche.

Bevorzugt ist der Führungskörper so ausgestaltet, dass der Laserstrahl der Lasersiegeleinheit im Wesentlichen senkrecht auf die zweite Oberfläche des transparenten Führungskörpers auftrifft und der Laserstrahl der Lasersiegeleinheit den transparenten Führungskörper an der ersten Oberfläche wieder in einem im Wesentlichen senkrechten Winkel zu dieser ersten Oberfläche verlässt. Eine erste Tangentialebene in dem Siegelpunkt ist damit bevorzugt parallel zu einer zweiten Tangentialebene in einem zweiten Punkt an der zweiten Oberfläche des Führungskörpers. Der zweite Punkt ist, in Verlängerung der Normalen durch den Siegelpunkt, auf der zweiten Oberfläche des Führungskörpers angeordnet.

Der Führungskörper ist unbeweglich über der Materialbahn fixiert.

Der Führungskörper kann daher beispielsweise die Form einer Kugel oder eines Ellipsoiden annehmen.

In einer besonders bevorzugten Ausführungsform ist der Führungskörper so ausgestaltet, dass er mit einer Materialbahn im Siegelbereich an mehreren Siegelpunkten in Kontakt ist. Besonders bevorzugt ist der Führungskörper so ausgestaltet, dass zumindest ein Teil der ersten Oberfläche des transparenten Führungskörpers über die gesamte Breite der Materialbahn im Siegelbreich an der Materialbahn anliegt. In dieser Ausführungsform kann der Laserstrahl der Lasersiegeleinheit aufgeweitet oder aufgespalten werden, um mindestens einen Teil der Siegelpunkte zu erreichen. Ebenfalls kann die Lasersiegeleinheit eine Vielzahl von Lasern umfassen, um zumindest einen Teil der Siegelpunkte zu erreichen. Auch kann ein Umlenken des Laserstrahls vorgesehen sein, so dass zu einem ersten Zeitpunkt der Laserstrahl den Führungskörper in einem ersten Siegelpunkt verlässt und dass zu einem zweiten Zeitpunkt der Laserstrahl den Führungskörper in einem zweiten Siegelpunkt verlässt. Bevorzugt weist der Führungskörper die Form eines Zylinders auf, wobei die Höhe des Zylinders bevorzugt mindestens der Breite der Materialbahn entspricht und wobei die geometrische Achse des zylinderförmigen Führungskörpers bevorzugt senkrecht zur Flussrichtung und parallel zu der Materialbahn im Siegelpunkt angeordnet ist. In dieser Ausführungsform wird die Berührfläche des Führungskörpers mit der Materialbahn verringert und damit die Reibung minimiert.

Ebenso kann der Führungskörper ein Volumen mit zwei parallel zueinander angeordneten ersten und zweiten Oberflächen, wie beispielsweise ein Quader, sein.

Da die erste Oberfläche Kontakt mit einer der flexiblen Materialbahnen hat, ist es vorteilhaft, wenn der Reibungskoeffizient zwischen der Materialbahn und der ersten Oberfläche des transparenten Führungskörpers höchstens 0,30, bevorzugt weniger als 0,2, bevorzugter weniger als 0,15 und insbesondere höchstens 0,1 nach ISO 8295 beträgt. Bei einem Reibungskoeffizienten >0,3 kann es zu Abrieb oder Verzug der Materialbahn kommen. Damit wird vermieden, dass die Materialbahnen durch die Haftreibungen und den damit zusätzlich auf die Materialbahnen ausgeübten Zug verformt werden. Die Qualität der Siegelnaht wird damit verbessert und es kann sichergestellt werden, dass die Produkte sicher steril verpackt werden.

Um die Reibung zwischen der ersten Oberfläche des transparenten Führungskörpers gering zu halten, besteht der transparente Führungskörper zumindest an der ersten Oberfläche aus Materialien, die eine geringe Rauheit aufweisen, wie PTFE oder PEEK. Der Reibungskoeffizient von PTFE sowie PEEK und der Materialbahn liegt zwischen 0,05 und 0,3. In einer alternativen Ausführungsform weist der transparente Führungskörper zumindest an der ersten Oberfläche bevorzugt eine Beschichtung aus reibungsarmen Materialien wie Silikon oder PTFE auf.

In einer möglichen Ausführungsform ist die Walze so konfiguriert, dass die flexiblen Materialbahnen entlang der vorgesehenen Siegelnaht zwischen der Walze und dem Führungskörper zusammengepresst werden, so dass sie jeweils ein medizinisches Produkt einschließen. Die Walze kann an ihrer Außenfläche Kompressionsbereiche mit einer abgeschlossenen Form aufweisen, die dazu bestimmt ist, die Materialbahnen um das jeweilige medizinische Produkt herum zusammenzupressen. Die Kompressionsbereiche weisen dabei bevorzugt Ausbuchtungen in Form der vorgesehenen Siegelnaht auf. Die Kompressionsbereiche können so geformt sein, dass die vorstehenden Kompressionsbereiche der gesamten vorgesehenen Siegelnaht oder einem Teil der vorgesehenen Siegelnaht folgen. Die vorgesehene Siegelnaht folgt dabei bevorzugt dem Umfang der Verpackung.

Die vorstehenden Kompressionsbereiche können mittels elektrischer Widerstände erhitzt werden, so dass sie von unbeheizten Bereichen umgeben sind.

In einer bevorzugten Ausführungsform umfasst die Walze einen oder mehrere vorstehende Kompressionsbereiche aus weichem Material. Die eine oder die mehreren vorstehenden Kompressionsbereiche der Walze bestehen vorzugsweise aus einem Elastomer, wie beispielsweise Silikon.

In einer weiteren Ausführungsform kann eine Maske verwendet werden, welche über der dem Führungskörper zugewandten Materialbahn angebracht ist. Die Maske ist für Laserstrahl teilweise durchlässig. Die Maske ist so beschaffen, dass die Materialbahn und ggf. der thermisch aktivierbare Klebstoff nur entlang der vorgesehenen Siegelnaht bestrahlt wird. So wird ausschließlich die vorgesehene Siegelnaht erhitzt. In dieser Ausführungsform überstreicht der Laserstrahl bevorzugt die gesamte Breite der Materialbahn. Dies kann durch eine Ausweitung des Laserstrahls mittels optischer Elemente, wie Linsen, Prismen und/oder Spiegeln, beispielsweise vor dem Durchlaufen des Führungskörpers erreicht werden. Der Laser kann ebenfalls gepulst sein. Ebenso kann die Maske so ausgestaltet sein, dass die Materialbahn und ggf. der thermisch aktivierbare Klebstoff nur entlang eines Teils der vorgesehenen Siegelnaht bestrahlt wird. Beispielsweise kann die Maske nur eine Bestrahlung entlang der vorgesehenen Längsnähte oder der vorgesehenen Quernähte erlauben.

Des Weiteren kann die Vorrichtung ein Hilfswalzenpaar umfassen. Dieses ist vorteilhafterweise dazu ausgestaltet die Materialbahnen vor dem Eintritt in den Siegelbereich um das Produkt herum in einem spitzen Winkel zusammenzuführen. Das Hilfswalzenpaar ist dabei stromaufwärts vor dem Siegelbereich angeordnet.

Die Vorrichtung umfasst bevorzugt ein Transportwalzenpaar, welches dazu ausgestaltet ist, die Verbundbahn aus flexiblen Materialbahnen und der zwischen den beiden flexiblen Endlosmaterialbahnen eingeschlossenen kontinuierlichen Anordnung von medizinischen Produkten nach dem Siegelprozess aus dem Siegelbereich stromabwärts weiterzuleiten.

Danach wird die Verbundbahn bevorzugt an der mindestens einen Schneideeinheit vorbeigeführt. Mittels der Schneideeinheit werden die Materialbahnen so durchtrennt, dass die medizinischen Produkte einzeln verpackt vorliegen. In einer weiter bevorzugten Ausführungsform werden die einzeln verpackten medizinischen Produkte mittels einer Sterilisationseinheit sterilisiert und/oder in einem Transportkarton verpackt.

Die Erfindung betrifft weiterhin ein System zum Verpacken eines, insbesondere flächig ausgestalteten, medizinischen Produktes. Das System umfasst eine erste erfindungsgemäße Vorrichtung und eine zweite erfindungsgemäße Vorrichtung. Die zwei flexiblen Materialbahnen werden zunächst in einer stromabwärts laufenden Richtung an der ersten Vorrichtung und danach an der zweiten Vorrichtung vorbeigeführt.

Die erste Vorrichtung umfasst eine erste Lasersiegeleinheit, eine erste Walze und einen ersten Führungskörper und die zweite Vorrichtung umfasst eine zweite Lasersiegeleinheit, eine zweite Walze und einen zweiten Führungskörper.

Die erste und die zweite Lasersiegeleinheit umfasst einen Laser, der dazu ausgestaltet ist, einen thermisch aktivierbaren Klebstoff, der auf zumindest einer Oberfläche mindestens einer der flexiblen Materialbahnen aufgebracht ist, oder eine der Materialbahnen zumindest teilweise zu erhitzen um sie miteinander zu verschmelzen. Alternativ kann anstelle zweier Laser auch der Laserstrahl eines einzigen Lasers in zwei Teilstrahlen aufgespalten werden, um so gleichzeitig als Laser der ersten Lasersiegeleinheit und als Laser der zweiten Lasersiegeleinheit zu fungieren. Die flexiblen Materialbahnen werden zunächst in einem ersten Siegelbereich, der zwischen der ersten Walze und dem ersten Führungskörper angeordnet ist, zumindest teilweise versiegelt. Anschließend werden die beiden Materialbahnen in einem zweiten Siegelbereich, der zwischen der zweiten Walze und dem zweiten Führungskörper angeordnet ist, zumindest teilweise versiegelt. Bevorzugterweise werden in dem ersten und in dem zweiten Siegelbereich unterschiedliche Teil der vorgesehenen Siegelnaht versiegelt.

Beispielsweise erzeugt die erste Vorrichtung eine Längsnaht. Die Längsnaht ist der Teil der Siegelnaht, der im Wesentlichen parallel zur Stromrichtung verläuft. Es werden zwei flexible Materialbahnen und ein Produkt bereitgestellt. Mindestens eine der Materialbahnen kann einen thermisch aktivierbaren Klebstoff aufweisen. Das Produkt wird zwischen den zwei gegenüberliegenden flexiblen Materialbahnen eingeschlossen. Dabei wird beispielsweise der Teil der vorgesehenen Siegelnaht, der im Wesentlichen parallel zur Stromrichtung verläuft, mittels der ersten Lasersiegeleinheit erhitzt. Die beiden Materialbahnen werden mittels der ersten Walze und des ersten Führungskörpers, insbesondere entlang dieser vorgesehenen Längsnaht, zusammengedrückt, um die Produkte zwischen den Materialbahnen einzuschließen. Die erste Walze weist bevorzugt Ausbuchtungen in Form der vorgesehenen Längsnaht auf. Das so eingeschlossene Produkt wird der zweiten Vorrichtung bereitgestellt. Die zweite Vorrichtung erzeugt dann beispielsweise eine Quernaht. Bevorzugt werden die Teile der vorgesehenen Siegelnaht, die noch nicht versiegelt wurden, mittels des Lasers der zweiten Lasersiegeleinheit erhitzt. Die beiden Materialbahnen werden dann mittels der zweiten Walze und des zweiten Führungskörpers, insbesondere entlang dieser vorgesehenen Quernaht, zusammengedrückt. Die zweite Walze weist bevorzugt Ausbuchtungen in Form der vorgesehenen Quernaht auf. Durch den zweiten Siegelschritt der zweiten Vorrichtung wird die Siegelnaht vervollständigt, so dass die Siegelnaht bevorzugt eine abgeschlossene Form aufweist.

Alternativ kann die erste Vorrichtung die Quernaht siegeln und die zweite Vorrichtung führt die Siegelung der Längsnaht durch.

Ebenso können Abschnitte der vorgesehenen Siegelnaht, die einen höheren Energieeintrag für eine sichere Sterilbarriere benötigen, mittels der zweiten Vorrichtung abermals versiegelt werden.

Die Verwendung eines Systems aus zwei erfindungsgemäßen Vorrichtungen, die jeweils die Längsnähte oder die Quernähte siegeln, hat den Vorteil, dass das System leicht auf verschiedene Verpackungsgrößen angepasst werden kann. Dies kann durch die Anpassung der Walzen, und insbesondere der Beabstandung der Ausbuchtungen, und/oder der Steuerung der Winkelgeschwindigkeit der Walze erreicht werden.

Die Erfindung betrifft auch ein Verfahren zum Verpacken eines, insbesondere flächig ausgestalteten, medizinischen Produktes. Das Verfahren umfasst die Schritte:
a. Bereitstellen zweier flexibler Materialbahnen und eines Produkts,
b. Einschließen des Produktes zwischen den zwei gegenüberliegenden flexiblen Materialbahnen,
c. Weiterleiten der flexiblen Materialbahnen und des Produktes in einen Siegelbereich, der zwischen einer Walze und einem Führungskörper angeordnet ist, mittels der Walze,
   wobei der Führungskörper durch eine erste Oberfläche und eine zweite Oberfläche entlang einer Ausdehnungsrichtung begrenzt wird,
   und wobei der Führungskörper eine der flexiblen Materialbahnen in einem Siegelpunkt an der ersten Oberfläche berührt,
d. Erhitzen zumindest eines Teils einer vorgesehenen Siegelnaht in dem Siegelbereich an dem Siegelpunkt mittels einer Lasersiegeleinheit, wobei der Laserstrahl der Lasersiegeleinheit den transparenten Führungskörper von der zweiten Oberfläche bis zu dem Siegelpunkt an der ersten Oberfläche durchdringt.

In einer ersten Ausführungsform weist zumindest eine der flexiblen Materialbahnen einen thermisch aktivierbaren Klebstoff an der Oberfläche auf, die der anderen Materialbahn zugewandt ist.

In einer zweiten Ausführungsform besteht mindestens eine der flexiblen Materialbahnen aus einem Material, das sich bei Erhitzung mit der zweiten flexiblen Materialbahn verbindet. Bei dem Material kann es sich dabei um einen Thermoplast oder ein Verbundmaterial umfassend einen Thermoplast handeln.

Durch das Verfahren wird die Energie des Lasers auf die Materialbahn und/oder auf den thermisch aktivierbaren Klebstoff schneller als bei herkömmlichen Verfahren, bei denen der Klebstoff und/oder die Materialbahn mittels einer in einem Anpresswalzenpaar angebrachten Heizeinheit erhitzt wird, übertragen. Daher ist es bei dem vorliegenden Verfahren möglich und vorteilhaft, dass die flexiblen Materialbahnen mit einer Bahngeschwindigkeit von 150 m/min bis 250 m/min, insbesondere 180 m/min bis 210 m/min, geführt werden.

Die dem Führungskörper zugewandte Materialbahn ist zumindest teilweise transparent für den Laserstrahl des Lasers der Lasersiegeleinheit.

Der Laserstrahl kann mittels geeigneter optischer Elemente, wie Spiegel, zu dem Führungskörper gelenkt werden. Dies ermöglicht eine flexiblere Anordnung des Lasers.

Wenn keine der Materialbahnen einen thermisch aktivierbaren Klebstoff umfasst, so ist die Lasersiegeleinheit dazu ausgestaltet, die vorgesehenen Siegelnähte der Materialbahnen auf eine Temperatur von 100°C bis 220°C, bevorzugt 110°C bis 180°C, insbesondere 120°C bis 160°C zu erhitzen. Hierbei ist ein kurzzeitiges Erreichen einer Temperatur von mindestens 10°C über der Schmelztemperatur der Materialbahn besonders vorteilhaft.

Umfasst die Materialbahn einen thermisch aktivierbaren Klebstoff, so ist die Lasersiegeleinheit dazu ausgestaltet, den thermisch aktivierbaren Klebstoff, der auf der Oberfläche mindestens einer der Materialbahnen aufgetragen ist, auf 80°C bis 160°C, bevorzugt 90°C bis 150°C, insbesondere 100°C bis 140°C zu erhitzen.

Hierbei ist eine Temperatur von bis zu 5°C über der Schmelztemperatur des thermisch aktivierbaren Klebstoffs besonders vorteilhaft. Insbesondere ist eine Temperatur von 80°C in Schritt d des Verfahrens vorgesehen.

Alternativ liegt die Temperatur der durch den Laserstrahl erwärmte Materialbahn bei 100°C bis 220°C, bevorzugt 110°C bis 180°C, insbesondere 120°C bis 160°C, so dass die Materialbahnen miteinander verschweißt werden können.

Insbesondere wird eine Wärmemenge von $0 , 01 \frac{mJ}{{mm}^{2}}$ bis $30 \frac{mJ}{{mm}^{2}}$, bevorzugt $0 , 1 \frac{mJ}{{mm}^{2}}$ bis 20 $\frac{mJ}{{mm}^{2}}$, insbesondere $1 \frac{mJ}{{mm}^{2}}$ bis $15 \frac{mJ}{{mm}^{2}}$ in die Materialbahn bzw. den thermisch aktivierbaren Klebstoff eingebracht.

Die verwendete Laserleistung wird dabei vor allem an das Quadratmetergewicht der Materialbahnen und, falls vorhanden, an das Quadratmetergewicht des thermisch aktivierbaren Klebstoffs angepasst. Des Weiteren ist die verwendete Laserleistung unter anderem von der spezifischen Wärme des Materials der Materialbahnen und des thermisch aktivierbaren Klebstoffs abhängig.

Bevorzugt kann die Leistung des Lasers auf die Kontur der vorgesehenen Siegelnaht abgestimmt werden. Besonders bevorzugt ist die Leistung des Lasers abgestimmt auf die Ausbreitung der vorgesehenen Siegelnaht senkrecht zur Stromrichtung, welche von dem Laserstrahl überstrichen wird. Hierbei kann die Laserleistung erhöht werden, wenn die vorgesehene Siegelnaht senkrecht zur Stromrichtung breiter ist, d.h. die Laserleistung muss ihren maximalen Wert annehmen, wenn die vorgesehene Siegelnaht die vollständige Breite der Materialbahn einnimmt. Die Laserleistung ist geringer als dieser maximale Leistungswert, wenn der zu erhitzende Bereich der vorgesehenen Siegelnaht nicht die gesamte Breite der Materialbahn einnimmt. Bevorzugt wird dabei der Laserstrahl aufgeweitet, wenn ein Teil der Kontur mit größerer Breite überstrichen wird und besonders bevorzugt wird die Leistung des Lasers dabei so erhöht, dass die Flächenleistung konstant über die gesamte vorgesehene Siegelnaht ist.

Für eine einzelne Verpackung kann daher die Leistung des Lasers zunächst erhöht werden, wenn der Laserstrahl auf die erste vorgesehene Quernaht trifft. Danach wird die Leistung des Lasers reduziert, um die beiden vorgesehenen Längsnähte zu erhitzen um anschließend wieder die Leistung des Lasers zu erhöhen, um die zweite vorgesehene Quernaht der Verpackung zu bestrahlen.

Die Lasersiegeleinheit kann in einer Ausführungsform zwei Laser umfassen. Ebenso kann statt zweier Laser auch der Laserstrahl eines einzigen Lasers in zwei Teilstrahlen aufgespalten werden.

Die Materialbahnen werden bevorzugt in einem in einem Winkel bis 90° zusammengeführt, wobei der Winkel bevorzugt höchstens 60°, insbesondere höchstens 30° beträgt.

Es ist darauf zu achten, dass die Materialbahn, welche die medizinischen Produkte trägt, im Wesentlichen senkrecht zur Schwerkraft ausgerichtet ist, damit die medizinischen Produkte nicht während des Siegelungsprozesses verrutschen und innerhalb der durch die vorgesehene Siegelnaht eingeschlossenen Fläche bleiben. Die Materialbahn, welche keine medizinischen Produkte trägt, kann dann an der Walze entlanggeführt werden, so dass sie im Siegelbereich mit der anderen Materialbahn zusammengeführt wird.

In einer bevorzugten Ausführungsform ist der Laser so angeordnet, dass der Laserstrahl im Wesentlichen senkrecht zur Oberfläche der Materialbahn ausgerichtet ist, welche den thermisch aktivierbaren Klebstoff aufweist. Durch eine senkrechte Ausrichtung des Laserstrahls zur zu bestrahlenden Fläche wird ein möglichst großer Energieeintrag erreicht.
Abbildung 1: Schematische Darstellung einer ersten Ausführungsform der Erfindung
Abbildung 2: Schematische Darstellung einer zweiten Ausführungsform der Erfindung
Abbildung 3: Schematische Darstellung eines Systems aus zwei erfindungsgemäßen Vorrichtungen

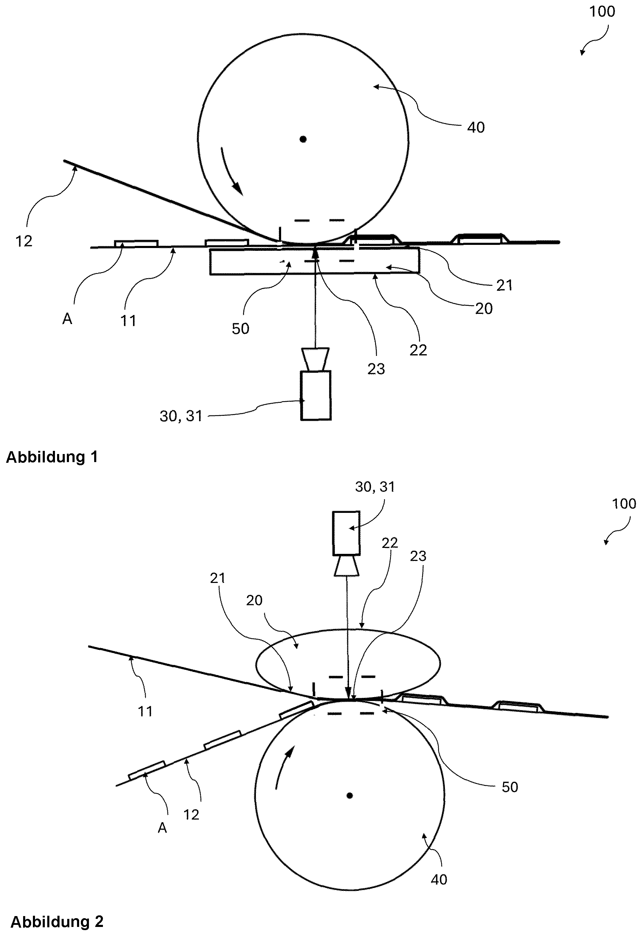

Abbildung 1 zeigt eine erste Ausführungsform der Vorrichtung zum Verpacken eines flächig ausgestalteten medizinischen Produkts. Bei den zu verpackenden medizinischen Produkten A kann es sich beispielsweise um Wundauflagen handeln.

Die Vorrichtung 100 umfasst einen Laser 31 als eine Lasersiegeleinheit 30. Mittels des Lasers 31 wird der thermisch aktivierbare Klebstoff, der auf einer Oberfläche einer ersten flexiblen Materialbahn 11 aufgebracht ist, entlang einer vorgesehenen Siegelnaht erhitzt. Die Oberfläche der ersten Materialbahn 11, welche den thermisch aktivierbaren Klebstoff trägt, ist der zweiten Materialbahn 12 zugewandt. Die erste Materialbahn 11 trägt die zu verpackenden Wundauflagen A. Die erste Materialbahn wird unter einem Winkel von ca. 30° mit einer zweiten Materialbahn 12 im Siegelbereich 50 zusammengeführt. Die Wundauflagen A werden zwischen den flexiblen Materialbahnen 11, 12 eingeschlossen.

Zwischen der Walze 40, deren Oberfläche Ausbuchtungen in Form der vorgesehenen Siegelnaht aufweist, und dem Führungskörper 20 werden die beiden Materialbahnen 11,12 im Siegelbereich 50 (gestricheltes Rechteck) an der vorgesehenen Siegelnaht, an welcher der Klebstoff erhitzt wird, zusammengepresst. Der Führungskörper 20 ist unbeweglich fixiert. Der Führungskörper 20 ist für den Laserstrahl transparent ausgestaltet, so dass der Laserstrahl in den Führungskörper 20 an dessen zweiter Oberfläche 22 eintritt und ihn an der ersten Oberfläche 21 des Führungskörpers 20 wieder verlässt. Der Laserstrahl trifft dort im Siegelbereich 50 auf die erste Materialbahn 11 auf. Die erste Materialbahn 11 ist ebenfalls für den Laserstrahl durchlässig, so dass dieser im Wesentlichen ohne Energieverluste auf den thermisch aktivierbaren Klebstoff trifft.

Da durch den Laserstrahl des Lasers 31 die Energie gezielt an die Materialbahn 11 und insbesondere den thermisch aktivierbaren Klebstoff abgegeben werden kann, ist eine zuverlässigere Versiegelung der Wundauflagen auch bei hohen Bahngeschwindigkeiten, wie 200 m/min, möglich. Ebenso wird die Wahrscheinlichkeit von Materialschaden durch zu hohe Temperaturen reduziert. Gleichfalls kann verhindert werden, dass infolge zu niedriger Siegeltemperaturen (d.h. unzureichender Energieeintrag) Siegelnähte Defekte aufweisen, welche die Sterilbarriere durchbrechen würden.

Der Führungskörper 20 ist quaderförmig. Die erste Oberfläche 21 des Führungskörpers 20 ist die der ersten Materialbahn 11 zugewandte Fläche des Quaders. Die zweite Oberfläche 22 des Führungskörpers 20 ist die den Materialbahnen abgewandte Fläche des Quaders. Die Breite des Führungskörpers entspricht mindestens der Breite der Materialbahnen 11,12 und der Führungskörper 20 liegt über die gesamte Breite der vorgesehenen Siegelnaht an der Materialbahn 11 im Siegelbereich an. Diese Siegelpunkte sind durch das Bezugszeichen 23 gekennzeichnet. Für die Versiegelung einer vorgesehen Quernaht wird der Laserstrahl aufgeweitet. Der Laser 31 ist gepulst, so dass der Laserstrahl den thermisch aktivierbaren Klebstoff nur an der vorgesehenen Quernaht erhitzt. Für die Versiegelung einer vorgesehen Längsnaht wird der Laserstrahl in zwei Laserstrahlen aufgeteilt. Der Laser 31 ist gepulst, so dass der Laserstrahl den thermisch aktivierbaren Klebstoff nur an der vorgesehenen Längsnaht erhitzt.

Der Reibungskoeffizienten zwischen der ersten Materialbahn 11 und der ersten Oberfläche 21 des Führungskörpers 20 beträgt 0,1. Der Führungskörper 20 besteht aus einem Quarzglas, das an seiner ersten Oberfläche 21 mit PTFE beschichtet ist. Die Materialbahnen 11,12 können damit ohne reibungsbedingte Verformungen durch den Siegelbereich 50 geführt werden.

Alternativ kann die Oberfläche der ersten Materialbahn 11 keinen thermisch aktivierbaren Klebstoff aufweisen, wobei die erste Materialbahn dann ausschließlich durch Verschweißen mit der zweiten Materialbahn verbunden wird.

Abbildung 2 zeigt eine alternative Ausführungsform der Erfindung.

Die Vorrichtung 100 umfasst ebenfalls einen Laser 31 als eine Lasersiegeleinheit 30, wobei die erste flexible Materialbahn 11 entlang einer vorgesehenen Siegelnaht mittels des Lasers 31 erhitzt wird. Die zweite Materialbahn 12 trägt die zu verpackenden Wundauflagen A. Die Wundauflagen A werden zwischen den flexiblen Materialbahnen 11, 12 eingeschlossen. Die Vorrichtung umfasst des Weiteren eine Walze 40 und einen für das Laserlicht durchlässigen Führungskörper 20.

Die beiden Materialbahnen 11,12 werden im Siegelbereich 50 zwischen der Walze 40 und dem Führungskörper 20 an der vorgesehenen Siegelnaht, an welcher die Materialbahn 11 erhitzt wird, zusammengepresst. Der Führungskörper 20 ist unbeweglich über der Walze 40 angeordnet.

Der Führungskörper 20 ist ein elliptischer Zylinder, welcher entlang seiner Höhe die erste Materialbahn 11 im Siegelbereich 50 berührt. Die Siegelpunkte sind durch das Bezugszeichen 23 gekennzeichnet. Die Grundfläche des Zylinders kann auch andere Formen annehmen, beispielsweise einen Kreis oder einen Halbkreis. Die Höhe des Zylinders entspricht mindestens der Breite der Materialbahnen 11.

In einer weniger bevorzugten Ausführungsform kann der Führungskörper 20 die Form eines Ellipsoids annehmen. Dann berührt der Führungskörper 20 die Materialbahn 11 in einem einzigen Siegelpunkt.

Die erste Oberfläche 21 des Führungskörpers 20 ist der ersten Materialbahn 11 zugewandt und die zweite Oberfläche 22 des Führungskörpers 20 ist den Materialbahnen abgewandt angeordnet.

Der Laserstrahl dringt von der zweiten Oberfläche 22 des Führungskörpers 20 senkrecht in den transparenten Führungskörper 20 ein und verlässt diesen wieder in einem der Siegelpunkte 23, an denen der Führungskörper 20 auf der ersten Materialbahn 11 aufliegt. Die Tangentialebene in einem Siegelpunkt 23 ist parallel zu der Tangentialebene in dem Punkt, an dem der Laserstrahl in den Führungskörper 20 eingetreten ist.

Die erste Materialbahn 11 kann teilweise an der ersten Oberfläche 21 entlanggeführt werden. Dies hat den Vorteil, dass der Winkel, unter dem die beiden Materialbahnen 11,12 zusammengeführt werden, vergrößert werden kann.

Die erste Oberfläche 21 des Führungskörpers 20 hat, zumindest an den Stellen, an denen die erste Materialbahn 11 an der ersten Oberfläche 21 entlanggeführt wird, einen Reibungskoeffizienten von 0,1 zwischen der ersten Materialbahn 11 und der ersten Oberfläche 21 des Führungskörpers 20. Die Materialbahnen 11,12 können damit ohne reibungsbedingte Verformungen durch den Siegelbereich 50 geführt werden.

Die Materialbahnen werden mit einer Bahngeschwindigkeit von 200 m/min geführt.

Für die Versiegelung einer vorgesehen Quernaht wird der Laserstrahl aufgeweitet. Der Laser 31 ist gepulst, so dass der Laserstrahl die erste Materialbahn 11 nur an der vorgesehenen Quernaht erhitzt wird. Für die Versiegelung einer vorgesehen Längsnaht wird der Laserstrahl in zwei Laserstrahlen aufgeteilt. Der Laser 31 ist gepulst, so dass der Laserstrahl die erste Materialbahn 11 nur an der vorgesehenen Längsnaht erhitzt.

Alternativ kann die erste Materialbahn 11 an der der zweiten Materialbahn 12 zugewandten Seite mit einem thermisch aktivierbaren Klebstoff beschichtet sein.

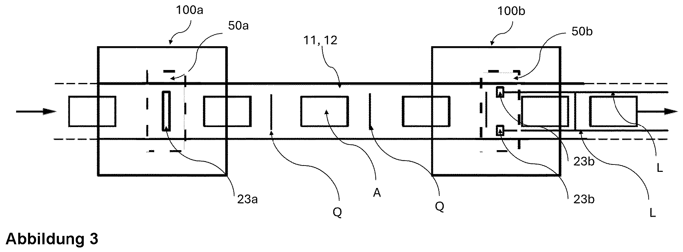

Abbildung 3 zeigt eine Draufsicht auf ein System aus zwei erfindungsgemäßen Vorrichtungen 100a, 100b zum Verpacken eines medizinischen Produkts A. Die zwei flexiblen Materialbahnen 11,12 werden zunächst in einer stromabwärts laufenden Richtung an der ersten Vorrichtung 100a und danach an der zweiten Vorrichtung 100b vorbeigeführt. Die erste Vorrichtung 100a erzeugt die Quernaht der Siegelnaht und die zweite Vorrichtung 100b erzeugt die Längsnaht der Siegelnaht.

Die erste Vorrichtung 100a umfasst eine erste Lasersiegeleinheit, eine erste Walze und einen ersten Führungskörper und die zweite Vorrichtung 100b umfasst eine zweite Lasersiegeleinheit, eine zweite Walze und einen zweiten Führungskörper. Die Komponenten der Vorrichtungen sind hier nicht dargestellt.

Die flexiblen Materialbahnen 11,12 werden zunächst in einem ersten Siegelbereich 50a, der zwischen der ersten Walze und dem ersten Führungskörper angeordnet ist, entlang der vorgesehenen Quernaht versiegelt. Im Siegelbereich 50a trifft der Laserstrahl der ersten Lasersiegeleinheit in einem ersten Bereich 23a auf die erste Materialbahn 11 auf. In diesem ersten Bereich 23a berührt der erste Führungskörper die erste Materialbahn 11. Der erste Bereich 23a erstreckt sich im Wesentlichen entlang einer senkrecht zur Flussrichtung verlaufenden Linie über die gesamte Breite der Materialbahnen. Der erste Laser ist gepulst, so dass mittels Bestrahlung der ersten Materialbahn im ersten Bereich 23a eine Quernaht Q erzeugt wird.

Anschließend werden in einem zweiten Siegelbereich 50b, der zwischen der zweiten Walze und dem zweiten Führungskörper angeordnet ist, die beiden Materialbahnen 11,12 entlang der vorgesehenen Längsnaht versiegelt. Im Siegelbereich 50b trifft der Laserstrahl der zweiten Lasersiegeleinheit in einem zweiten Bereich 23b auf die erste Materialbahn 11 auf und erzeugt die Längsnaht A. Der zweite Führungskörper berührt die erste Materialbahn zumindest in diesem zweiten Bereich 23b. Der zweite Bereich 23b besteht aus zwei Auftreffpunkten, die jeweils einer der beiden Längsnähte A zugeordnet werden können.

## Patentansprüche

1. Vorrichtung (100) zum Verpacken eines, insbesondere flächig ausgestalteten, medizinischen Produktes (A) zwischen zwei gegenüberliegenden flexiblen Materialbahnen (11, 12) umfassend:
- eine Lasersiegeleinheit (30), umfassend einen Laser (31),
- eine Walze (40), die dazu ausgestaltet ist, die Materialbahnen (11, 12) und das Produkt (A) weiterzuleiten,
- einen transparenten Führungskörper (20), der für den Laserstrahl der Lasersiegeleinheit (30) durchlässig ist
und wobei eine erste Oberfläche (21) und eine zweite Oberfläche (22) den transparenten Führungskörper (20) entlang einer Ausdehnungsrichtung begrenzen,
wobei der Führungskörper (20) eine der Materialbahnen (11) an zumindest einem Siegelpunkt (23) an der ersten Oberfläche (21) in einem Siegelbereich (50) berührt, wobei der Siegelbereich (50) zwischen dem Führungskörper (20) und der Walze (40) angeordnet ist,
wobei die Lasersiegeleinheit (30) so angeordnet ist, dass der Laserstrahl der Lasersiegeleinheit (30) den transparenten Führungskörper (20) von der zweiten Oberfläche (22) zu dem Siegelpunkt (23) an der ersten Oberfläche (21) durchdringt, und wobei die Lasersiegeleinheit (30) dazu ausgestaltet ist, einen thermisch aktivierbaren Klebstoff, der auf zumindest einer Oberfläche mindestens einer der flexiblen Materialbahnen (11, 12) aufgebracht ist, oder ein Material mindestens einer der flexiblen Materialbahnen (11,12) zumindest an dem Siegelpunkt (23) zu erhitzen.

2. Die Vorrichtung (100) nach Anspruch 1, wobei die Walze (40) einen oder mehrere vorstehenden Kompressionsbereiche umfasst.

3. Vorrichtung (100) nach Anspruch 1 oder 2, wobei die Vorrichtung ein Transportwalzenpaar umfasst, welches dazu ausgestaltet ist, die Materialbahnen (11, 12) und das Produkt (A) nach dem Siegelprozess aus dem Siegelbereich (50) weiterzuleiten.

4. Vorrichtung (100) nach einem der vorhergehenden Ansprüche, wobei zumindest ein Teil der ersten Oberfläche (21) des transparenten Führungskörpers (20) über die gesamte Breite der Materialbahn im Siegelbreich an der Materialbahn anliegt.

5. Vorrichtung (100) nach einem der vorhergehenden Ansprüche, wobei der Reibungskoeffizient zwischen der Materialbahn (11) und der ersten Oberfläche (21) des transparenten Führungskörpers (20) nach ISO 8295 höchstens 0,30, bevorzugt weniger als 0,2, bevorzugter weniger als 0,15 und insbesondere höchstens 0,1 beträgt.

6. Vorrichtung (100) nach einem der vorhergehenden Ansprüche, wobei der Laserstrahl der Lasersiegeleinheit (30) im Wesentlichen senkrecht auf die zweite Oberfläche (22) des transparenten Führungskörpers (20) auftrifft und der Laserstrahl der Lasersiegeleinheit (30) den transparenten Führungskörper (20) an der ersten Oberfläche (21) wieder in einem im Wesentlichen senkrechten Winkel zu dieser ersten Oberfläche (21) wieder verlässt.

7. Vorrichtung (100) nach einem der vorhergehenden Ansprüche,
wobei der Laserstrahl des Lasers dazu ausgestaltet ist, mindestens eine Energie von $0 , 01 \frac{mJ}{{mm}^{2}}$ bis $30 \frac{mJ}{{mm}^{2}}$, bevorzugt $0 , 1 \frac{mJ}{{mm}^{2}}$ bis $20 \frac{mJ}{{mm}^{2}}$, insbesondere $1 \frac{mJ}{{mm}^{2}}$ bis 15 $\frac{mJ}{{mm}^{2}}$ auf die vorgesehene Siegelnaht zu übertragen.

8. System umfassend eine erste Vorrichtung (100a) und eine zweite Vorrichtung (100b) nach einem der Ansprüche 1 bis 7, wobei die zwei flexiblen Materialbahnen (11, 12) zunächst in einer stromabwärts laufenden Richtung an der ersten Vorrichtung (100a) und danach an der zweiten Vorrichtung (100b) vorbeigeführt werden.

9. Verfahren zum Verpacken eines, insbesondere flächig ausgestalteten, medizinischen Produktes (A), umfassend die Schritte:
a. Bereitstellen zweier flexibler Materialbahnen (11, 12) und eines Produkts (A),
b. Einschließen des Produktes (A) zwischen den zwei gegenüberliegenden flexiblen Materialbahnen (11, 12),
c. Weiterleiten der flexiblen Materialbahnen (11, 12) und des Produktes (A) in einen Siegelbereich (50), der zwischen einer Walze (40) und einem Führungskörper (20) angeordnet ist, mittels der Walze (40),
und wobei der Führungskörper (20) durch eine erste Oberfläche (21) und eine zweite Oberfläche (22) entlang einer Ausdehnungsrichtung begrenzt wird,
wobei der Führungskörper (20) eine der flexiblen Materialbahnen (11) in einem Siegelpunkt (23) an der ersten Oberfläche (21) berührt,
d. Erhitzen zumindest eines Teils einer vorgesehenen Siegelnaht in dem Siegelbereich (50) an dem Siegelpunkt (23) mittels einer Lasersiegeleinheit (30), wobei der Laserstrahl der Lasersiegeleinheit (30) den transparenten Führungskörper (20) von der zweiten Oberfläche (22) bis zu dem Siegelpunkt (23) an der ersten Oberfläche (21) durchdringt.

10. Verfahren nach Anspruch 9, wobei mindestens die dem Laserstrahl der Lasersiegeleinheit (30) zugewandte Materialbahn (11) zumindest teilweise transparent für den Laserstrahl ist.

11. Verfahren nach mindestens einem der Ansprüche 9 oder 10, bei dem die flexiblen Materialbahnen (11, 12) mit einer Geschwindigkeit von 100 bis 250 m/min, bevorzugt 150 bis 250 m/min, insbesondere 180 bis 210 m/min in Stromrichtung bewegt werden.

12. Verfahren nach mindestens einem der Ansprüche 9 bis 11, wobei zumindest eine der flexiblen Materialbahnen (11, 12) einen thermisch aktivierbaren Klebstoff auf der Oberfläche aufweist, die der anderen Materialbahn zugewandt ist.

13. Verfahren nach Anspruch 12, wobei die Materialbahnen (11,12) auf eine Temperatur von 100°C bis 220°C, bevorzugt 110°C bis 180°C, insbesondere 120°C bis 160°C erhitzt werden.

14. Verfahren nach einem der Ansprüche 9 bis 11, wobei die Materialbahnen (11,12) auf eine Temperatur von 80°C bis 160°C, bevorzugt 90°C bis 150°C, insbesondere 100°C bis 140°C erhitzt werden.
